# EUROPEAN PATENT SPECIFICATION

(11) **EP 4 045 383 B1**
(45) Date of publication and mention of the grant of the patent: **06.12.2023**
(21) Application number: 20812127.7
(22) Date of filing: 15.10.2020
(51) Int. Cl.: B62B 5/00, G01G 19/414, G06Q 20/20, G06Q 20/32, G07G 1/00, B62B 3/10, B62B 3/14

(54) **SHOPPING TROLLEY FOR SELF-SERVICE SHOPPING**
EINKAUFSWAGEN FÜR DEN SELBSTBEDIENUNGSEINKAUF
CHARIOT D'ACHAT POUR ACHATS EN LIBRE-SERVICE

(30) Priority: 16.10.2019 PL 43149319
(43) Date of publication of application: 24.08.2022
(73) Proprietor: Mago S.A., 05-830 Nadarzyn (PL)
(72) Inventor: MARCZAK, Piotr, 05-480 Karczew (PL)
(74) Representative: JWP Patent & Trademark Attorneys
(86) International application number: PCT/IB2020/059685
(87) International publication number: WO 2021/074835

(56) References cited:
- WO-A1-2020/201386
- CN-B- 105 083 354
- DE-A1-102018 132 059
- DE-U1-202016 002 655
- JP-A- H0 370 674
- US-A1- 2010 318 440
- S N Mago S.A.: "Clever - The future doesn`t wait in line", , 4 February 2020 (2020-02-04), XP055765192, Retrieved from the Internet: URL:https://www.mago.com/wp-content/upload s//2020/03/MOBILE-SELF-CHECKOUT.pdf [retrieved on 2021-01-14]

## Description

The invention provides a shopping trolley for self-service shopping. In particular, the trolley is intended for carrying out shopping process without attendance of the shop staff, as well as with maximum limitation of contact with the goods being purchased and without a conventional cash checkout.

Solutions are known for manually driven shopping trolleys comprising a frame construction provided with a user handrail and a chassis with a set of road wheels. On the frame construction of the trolley a basket is seated into which the purchasing user puts goods taken from shop shelves or racks, then he/she transports them to a cash checkout station where he/she unloads them in order to complete respective payment transaction, and then he/she packs them into a shopping bag and takes out of the shop area.

For small or medium shopping, customers often chose trolleys in which the frame construction has a holder for a shopping basket, the latter being often removable and positioned within the frame construction rack exclusively for the time of carrying out the shopping process. Such a solution is known, e.g. from FR 2658146 A which discloses a foldable frame with road wheels, comprising two sets of wheel struts, and horizontal bars on which containers for goods are hung.

Similarly, US 5865449 discloses a construction frame of a shopping trolley with a pair of inclined longitudinal beams coupled with a transverse user handrail and a chassis seated on a front and rear road wheels assembly. In this case the trolley is provided with two fixed shopping baskets that are rotatably suspended on brackets secured in the frame longitudinal beams.

CN105083354 discloses a self-help shopping system, a shopping cart and a self-help shopping method. The self-help shopping system comprises a barcode collection device, a weighing sensor, a controller, an alarm, a demagnetizing device, a display and a wireless data transceiver. The barcode collection device is used for scanning a barcode of a selected commodity, generating a piece of barcode datum and sending the barcode datum to the controller. The weighing sensor is used for measuring the weight information of the selected commodity and sending the weight information to the controller. The controller is used for judging the corresponding relation between the received barcode datum and the received weight information with a known barcode datum and known weight information. The alarm is used for sending alarming when the received barcode datum and the received weight information do not conform to the known barcode datum and known weight information. The demagnetizing device is used for demagnetizing the selected commodity. The display is used for displaying the datum received from the controller. The wireless data transceiver is used for transmitting the datum between the controller and a commodity database.

DE202016002655U1 discloses a shopping trolley or roller bag, characterized in that a battery or accumulator-operated lamp is installed in the shopping bag, which illuminates the interior of the shopping bag of the shopping trolley.

JPH0370674A discloses a cart main unit that is formed by respectively arranging runnable casters in the bottom part and a handle in the upper part. A shopping cage which serves as a commodity storage part having a commodity input port in the upper surface, scale for measuring weight of a commodity stored in the shopping cage and a scanner or the like for reading a bar code similarly of the commodity are respectively arranged in an intermediate part of the cart main unit. In the scanner, its read window is arranged to tilt toward the upper side of the shopping cage, in the upper from the commodity input port, so that a read region of the scanner is positioned in the upper side from the commodity input port of the shopping cage. In this way, the commodity is easily further accurately read.

In view of the continuous development and improvement of shopping systems, as well as increasing demand for and interest of the clients in solutions based on self-service processes, conventional shopping trolley constructions became provided with various functional assemblies built therein. For example, such assemblies enable autonomous scanning, recognition and weighing goods, carrying out payment transactions, as well as identification of a client and tracking his/her presence within the shopping area, or finally pairing the shop system with the client's personal device of a smartphone type, as well as interaction with mobile applications accessible thereon that allow for assisting in the shopping process or for participation in promotion campaigns or loyalty programs. The aim in common of the solutions of this kind is to provide communication with clients and support in the shopping process as well as the highest possible extent of autonomous contact with the goods being purchased.

Solutions that show the above indicated functionalities are known from US 2015206121 A1, US 7679522 B2 or WO 18036075 A1. For example, WO 18036075 A1 discloses a shopping trolley in which the trolley body comprises a capacious basket for storing goods and, on a handrail, an intelligent terminal device provided with a computer with a touchpad with a function for entering data concerning products and displaying contents for the user. The trolley is provided with radio frequency identification (RFID) marks for collecting information concerning the trolley serial number to enable its identification in the system. Additionally, the trolley may have one and/or any combination of modules such as, for example, trolley weight sensor or a certified scales for goods built in the shopping basket, product barcode scanning device, positioning device of a calculation-checkout module for self-service transaction operations.

In the above discussed solutions, in particular with regard to an intelligent shopping trolley, constructions are indicated where conventional, capacious and space-requiring shopping baskets alone or in sets are used. Due to the required stability and presence of functional modules, there are no trolleys in the prior art that would ensure, on one hand, such systemic solutions as recognition or weighting goods being purchased, and would enable, on the other hand, making the construction independent on the conventionally used baskets and use shopping bags instead that could be directly taken by the client when leaving the shopping area. Such a solution would greatly simplify shopping processes and would contribute to limitation of the contact with the goods to a minimum, i.e. exclusively to placing the selected products into the shopping bag.

For these reasons, the purpose of the invention is to propose a shopping trolley for self-service shopping, providing a possibility to place products in a trolley-dedicated bag that, when the shopping process is completed, may be taken home by the client. In particular, the solution is intended to provide a possibly greatly limited contact with goods as well as systemic functionalities allowing inter alia autonomous scanning, recognition and weighting products. Additional advantageous aim of the invention is enabling interaction with the shop computer system, including for example a possibility for pairing with personalized settings of the user's mobile applications or identifying the trolley operation within the respective shopping area.

A shopping trolley for self-service shopping according to the invention comprises a frame construction with road wheels, where the frame construction comprises longitudinal beams that are coupled with each other at the top by means of a handrail transverse thereto, and at the bottom they are provided with a road wheels suspension assembly. The frame construction is provided with an electronic control device functionally communicated thereto and with a scale, where the electronic control device is seated on the handrail and the scale is seated above the road wheels suspension assembly. The shopping trolley is characterized in that it comprises a removable shopping bag with a bottom, and the scale is provided with shopping bag securing grips, and the shopping bag is seated with it bottom on the surface of the scale.

Preferably, the surface of the scale extends between the longitudinal beams and its trolley front-facing front portion protrudes beyond the edges of the longitudinal beams in the frame construction.

Also preferably, the shopping bag securing grips are made of bars and at the upper part they are shaped into closed loops and below the bars extend in parallel along the inner surfaces of the longitudinal beams and are secured in the surface of the scale.

Also preferably, the scale is provided with a protective rail to guard its front part.

Further preferably, the scale has a scale display which is positioned in the rear part of the scale.

According to another advantageous solution the longitudinal beams are tilted rearward.

Preferably, the road wheels suspension assembly comprises two sets of longitudinal frames connected to the road wheels and secured at the bottom edge of the longitudinal beams of the frame construction, and each set of longitudinal frames comprises a front wheel frame and a rear wheel frame, both extending angularly and in mutually opposing directions.

Preferably, the rear wheel frame and the front wheel frame are fixed in one point, and the front wheel frame is secured at the inner side, while the rear wheel frame at the outer side, of the longitudinal beam of the frame construction.

Further preferably, the electronic control device is provided with a computer, a user display, loudspeakers, a barcode scanner and a wireless communication module.

Also preferably, the trolley has electric charging modules.

Preferably, the electric charging modules are induction charging modules.

Additionally preferably, the trolley is provided with LED illumination means, positioned along with the edges of the frame construction.

An undoubted advantage of the trolley according to the invention is providing a construction that is entirely independent from the so far used shopping baskets or sets thereof. At the same time, functional communication between the electronic control device and the scale makes it possible to minimize contact with the goods placed within the shopping bag and enables autonomous shopping processes.

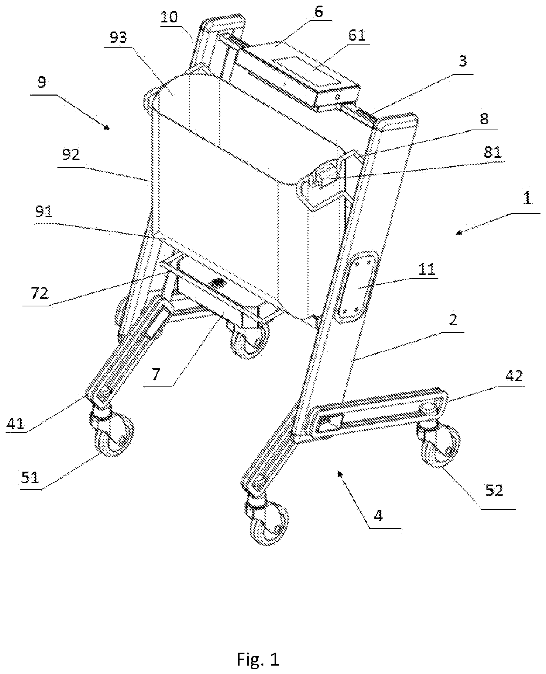

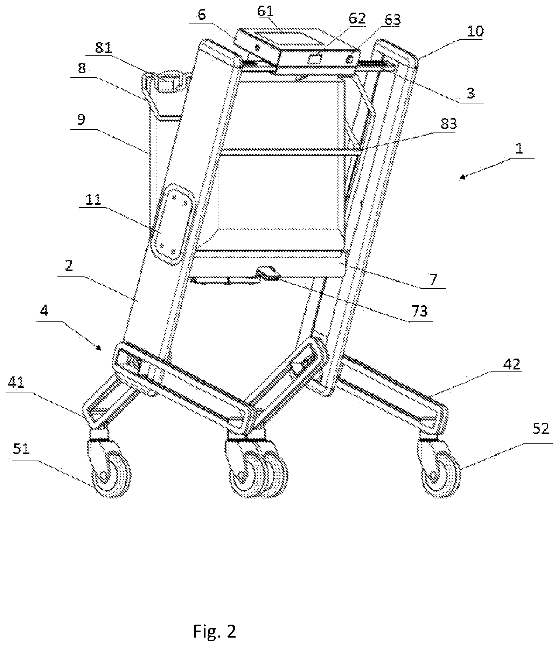

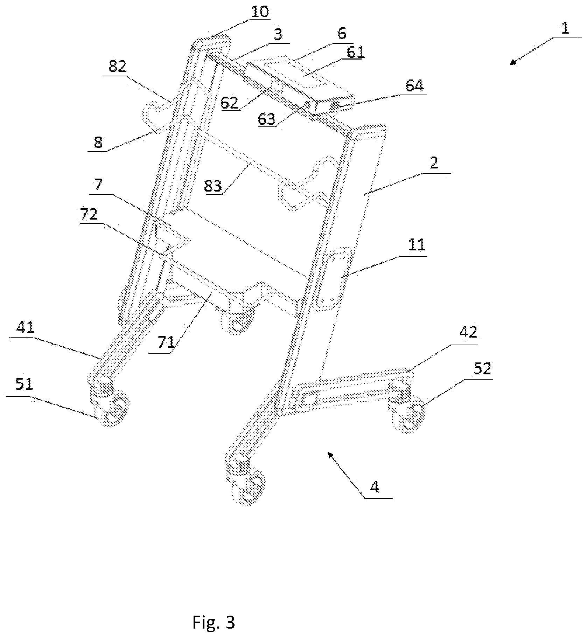

The object of the invention is illustrated by way of examples in the drawing where fig. 1 shows a perspective side view of a shopping trolley from the front, with a suspended shopping bag; fig. 2 shows a perspective side view of a shopping trolley from the back, with a suspended shopping bag; and fig. 3 shows analogous as in fig. 1 view of a shopping trolley, in an option without a shopping bag suspended therein.

As shown in fig. 1, a shopping trolley is made based on a frame construction 1 with two parallel and rearward-tiled longitudinal beams 2. The longitudinal beams 2 are coupled at the top by a handrail 3 transverse thereto, said handrail being intended to be grasped by the user and pushed in order to move the trolley when carrying out shopping process within a shopping area. At their bottom the longitudinal beams 2 are provided with a road wheel suspension assembly 4, comprising pairs of elongated frames 41, 42, tilted and extending in opposite directions relative each other, for front road wheels 51 and rear road wheels 52, respectively. According to the embodiment shown, the frames are secured in the longitudinal beams 2 at one point, and the frame 41 of the front road wheel is secured at the inner side, while the frame 42 of the rear road wheel is secured at the outer side of the longitudinal beam 2.

To the handrail 3, an electronic control device 6 is attached which is provided with a computer (not shown) and constitutes the main module for communication with the user while controlling operation of the remaining accessible functional modules as well as the course of the self-service shopping process. According to an embodiment, electronic control device 6 is formed as a panel that faces the user and it has a display 61, a bar code reader 62, and a wireless communication module 63. It should be emphasized that for the subject invention the Inventors also contemplate is possible to use some other functionalities non-illustrated herein and modules to be included in the electronic control device 6. These may be for example loudspeakers 64, built-in positions sensors and software for self-service payment transactions (not shown in the drawing).

Over the road wheels suspension assembly 4 the frame construction 1 comprises a scale 7 that is in functional, wire or wireless (not shown) communication with the electronic control device 6 and enables weighing goods being purchased. Operational area of the scale extends between the longitudinal beams 2 and additionally has a front portion 71 facing the front of the trolley, guarded by a protective rail 72. Scale 7, as in particular shown in fig. 2, additionally has a scale display 73, positioned at its rear part so that it is visible for the user who drives the shopping bag.

The scale 7 is further provided with grips 8 intended for securing a shopping bag 9 within the frame construction of the trolley. According to the embodiment shown in fig. 3 said grips 8 are made of bars which at their upper side are shaped into closed loops and they extend below in parallel along the inner surfaces of the longitudinal beams. The loops of the grips 8 may comprise additional fixing means, as illustrated in figs. 1 and 2, a fixing catch 81 and a shaped concavity 82, which is particularly clearly visible in the embodiment shown in fig. 3. Furthermore, in order to strengthen and provide sufficient durability and carrying strength for the grips 8, loaded with a shopping bag 9 suspended therefrom, bars of the grips 8, in the portion below the shaped loops, are strengthened by means of a crossbar 83 that connects them to each other.

According to the intended use of the shopping trolley according to the invention, on the grips 8 a removable reusable shopping bag 9 is suspended which, when loaded with products and upon termination of the shopping process within a shopping area, is taken by the purchaser home, without any need for repacking. The shopping bag 9 has a bottom 91 and a carrying surface 92 and terminates in an opening 93 through which its interior is accessible. According to the embodiment illustrated in figs. 1 and 2, the shopping bag 9 is suspended from the grips 8 so that it is seated with its bottom 91 on the surface of the scale 7, and thus the scale 7 contacts the product to be weighed placed within the shopping bag 9.

Initial recognition and intended use of a product to be weighed is effected at the electronic control device 6, for example by means of identification of a product barcode read by a barcode reader 62 or by inputting some other suitable product identifier. When the kind of the product to be weighed is selected, the scale 7 checks its position and status, is balanced and prepared for weighing based on the data obtained from the contact with the shopping bag 9 seated thereon, and as a result a signal of readiness for purchasing the selected product is generated. The selected product is positioned within the shopping bag 9 and further on it is automatically weighed, and its value is calculated by the computer and added to the shopping list.

Apart from what is commented above, a trolley according to an embodiment has operational state signalling LED illumination battens 10, positioned along the edges of the longitudinal beams 2 of the frame construction 1. Additionally, in order to ensure electric charging, it has a dedicated connectors that according to the embodiment shown are induction charging modules 11 positioned on the longitudinal beams 2.

It is of course contemplated that the subject invention is not limited to the above presented embodiments, but various modifications and developments are possible within the scope provided by the enclosed patent claims, without departing from the idea of the invention.

## Claims

1. Shopping trolley for self-service shopping, comprising a frame construction (1) with road wheels (51, 52), where said frame construction (1) comprises longitudinal beams (2) which are coupled at the top with each other by a handrail (3) transverse thereto, and at the bottom they are provided with a road wheels suspension assembly (4), where said frame construction (1) is provided with an electronic control device (6) functionally communicated thereto and with a scale (7), said electronic control device (6) being seated on said handrail (3) and said scale (7) being seated over said road wheels suspension assembly (4), **characterized in that** it comprises a removable shopping bag (9) with a bottom (91) and said scale (7) is provided with grips (8) for securing said shopping bag (9), said shopping bag (9) being seated with its bottom (91) on the surface of said scale (7).

2. Trolley according to claim 1, **characterized in that** the surface of said scale (7) extends between said longitudinal beams (2) and its trolley front-facing front portion (71) protrudes beyond the edges of said longitudinal beams (2) in said frame construction (1).

3. Trolley according to claim 1 or 2, **characterized in that** said grips (8) are formed of bars and at their upper part they are shaped into closed loops while below said bars extend in parallel along the inner surfaces of said longitudinal beams (2) and are secured to the surface of said scale (7).

4. Trolley according to claim 3, **characterized in that** the scale (7) is provided with a protective rail (72) to guard its front side.

5. Trolley according to claim 3 or 4, **characterized in that** said scale (7) has a scales display (73) which is positioned at the rear portion of said scale (7).

6. Trolley according to claim 1, **characterized in that** said longitudinal beams (2) are tilted rearward.

7. Trolley according to claim 1 or 6, **characterized in that** said road wheels suspension assembly (4) is constituted by two sets of elongated frames (41, 42) engaged with road wheels (51, 52) and positioned at the bottom edge of said longitudinal beams (2) of said frame construction (1), each set of elongated frames comprising a frame (41) of a front wheel (51) and a frame (42) of a rear wheel (52), extending angularly and in mutually opposite directions.

8. Trolley according to claim 7, **characterized in that** said frame (42) of said rear wheel (52) and said frame (41) of said front wheel (51) are fixed at one point, where said frame (41) of said front wheel (51) is fixed at the inner side, and said frame (42) of said rear wheel (52) is fixed at the outer side, of said longitudinal beam (2) of said frame construction (1).

9. Trolley according to claim 1, **characterized in that** said electronic control device (6) is provided with a computer, a user display (61), loudspeakers (64), a barcode scanner (62) and a wireless communication module (63).

10. Trolley according to any one of the preceding claims, **characterized in that** it has electric charging modules.

11. Trolley according to claim 10, **characterized in that** said electric charging modules are induction charging modules (11).

12. Trolley according to any one of the preceding claims, **characterized in that** it is provided with LED illumination means (10) positioned along the edges of said longitudinal beams of said frame construction.

## Patentansprüche

1. Einkaufswagen für den Selbstbedienungseinkauf, umfassend eine Rahmenkonstruktion (1) mit Laufrädern (51, 52), wobei die Rahmenkonstruktion (1) Längsträger (2) umfasst, die oben durch einen dazu queren Handlauf (3) miteinander gekoppelt sind und die unten mit einer Laufradaufhängungsbaugruppe (4) versehen sind, wobei die Rahmenkonstruktion (1) mit einer damit funktional kommunizierten elektronischen Steuervorrichtung (6) und mit einer Waage (7) versehen ist, wobei die elektronische Steuervorrichtung (6) auf dem Handlauf (3) sitzt und die Waage (7) über der Laufradaufhängungsbaugruppe (4) sitzt, **dadurch gekennzeichnet, dass** es eine abnehmbare Einkaufstasche (9) mit einem Boden (91) umfasst und die Waage (7) mit Griffen (8) zum Befestigen der Einkaufstasche (9) versehen ist, wobei die Einkaufstasche (9) mit ihrem Boden (91) auf der Oberfläche der Waage (7) aufsitzt.

2. Wagen nach Anspruch 1, **dadurch gekennzeichnet, dass** die Oberfläche der Waage (7) sich zwischen den Längsträgern erstreckt (2) und ihr vorderer, der Vorderseite des Wagens zugewandter Anteil (71) ragt über die Ränder der Längsträger (2) in der Rahmenkonstruktion (1) hinaus.

3. Wagen nach Anspruch 1 oder 2, **dadurch gekennzeichnet, dass** die Griffe (8) aus Stangen gebildet sind und an ihrem oberen Teil zu geschlossenen Schleifen geformt sind, wobei sich die Stangen unten, parallel zu den Innenflächen der Längsträger (2) erstrecken und an der Oberfläche der Waage (7) befestigt sind.

4. Wagen nach Anspruch 3, **dadurch gekennzeichnet, dass** die Waage (7) ist mit einer Schutzschiene (72) zum Schutz ihrer Vorderseite versehen.

5. Wagen nach Anspruch 3 oder 4, **dadurch gekennzeichnet, dass** die Waage (7) eine Waagenanzeige (73) aufweist, die am hinteren Anteil der Waage (7) angeordnet ist.

6. Wagen nach Anspruch 1, **dadurch gekennzeichnet, dass** die Längsträger (2) nach hinten geneigt sind.

7. Wagen nach Anspruch 1 oder 6, **dadurch gekennzeichnet, dass** die Laufradaufhängungsbaugruppe (4) aus zwei Sätzen länglicher Rahmen (41, 42) besteht, die mit Laufrädern (51, 52) in Eingriff stehen und an dem unteren Rand der Längsträger (2) der Rahmenkonstruktion (1) angeordnet sind, wobei jeder Satz länglicher Rahmen einen Rahmen (41) eines Vorderrads (51) und einen Rahmen (42) eines Hinterrads (52) umfasst, die sich winklig und in zueinander entgegengesetzten Richtungen erstrecken.

8. Wagen nach Anspruch 7, **dadurch gekennzeichnet, dass** der Rahmen (42) des Hinterrads (52) und der Rahmen (41) des Vorderrads (51) an einem Punkt fixiert sind, wobei der Rahmen (41) des Vorderrads (51) an der Innenseite fixiert ist, und der Rahmen (42) des Hinterrads (52) an der Außenseite des Längsträgers (2) der Rahmenkonstruktion (1) fixiert ist.

9. Wagen nach Anspruch 1, **dadurch gekennzeichnet, dass** die elektronische Steuervorrichtung (6) mit einem Computer, einer Benutzeranzeige (61), Lautsprechern (64), einem Barcode-Scanner (62) und einem drahtlosen Kommunikationsmodul (63) versehen ist.

10. Wagen nach einem der vorhergehenden Ansprüche, **dadurch gekennzeichnet, dass** es elektrische Lademodule aufweist.

11. Wagen nach Anspruch 10, **dadurch gekennzeichnet, dass** die elektrischen Lademodule Induktionslademodule (11) sind.

12. Wagen nach einem der vorhergehenden Ansprüche, **dadurch gekennzeichnet, dass** es mit LED-Beleuchtungsmitteln (10) versehen ist, die entlang der Ränder der Längsträger der Rahmenkonstruktion angeordnet sind.

## Revendications

1. Chariot de courses pour achats en libre-service, comprenant une construction de cadre (1) avec des roulettes (51, 52), où ladite construction de cadre (1) comprend des poutres longitudinales (2) qui sont couplées en haut les unes aux autres par une main courante (3) transversale à celles-ci, et en bas elles sont munies d'un ensemble de suspension de roulettes (4), où ladite construction de cadre (1) est munie d'un dispositif de commande électronique (6) qui lui communique de manière fonctionnelle et d'une balance (7), ledit dispositif de commande électronique (6) étant assis sur ladite main courante (3) et ladite balance (7) étant assise sur ledit ensemble de suspension de roulettes (4), **caractérisé en ce qu'**il comprend un sac à provisions amovible (9) avec un fond (91) et ladite balance (7) est munie de poignées (8) pour fixer ledit sac à provisions (9), ledit sac à provisions (9) étant assis avec son fond (91) sur la surface de ladite balance (7).

2. Chariot selon la revendication 1, **caractérisé en ce que** la surface de ladite balance (7) s'étend entre lesdites poutres longitudinales (2) et sa partie avant (71) tournée vers l'avant du chariot fait saillie au-delà des bords desdites poutres longitudinales (2) dans ladite construction de cadre (1).

3. Chariot selon la revendication 1 ou 2, **caractérisé en ce que** lesdites poignées (8) sont formées de barres et, à leur partie supérieure, elles sont formées en boucles fermées tandis qu'en dessous, lesdites barres s'étendent parallèlement le long des surfaces intérieures desdites poutres longitudinales (2) et sont fixées à la surface de ladite balance (7).

4. Chariot selon la revendication 3, **caractérisé en ce que** la balance (7) est munie d'un rail de protection (72) pour protéger son côté avant.

5. Chariot selon la revendication 3 ou 4, **caractérisé en ce que** ladite balance (7) a un affichage de balance (73) qui est positionné au niveau de la partie arrière de ladite balance (7).

6. Chariot selon la revendication 1, **caractérisé en ce que** lesdites poutres longitudinales (2) sont inclinées vers l'arrière.

7. Chariot selon la revendication 1 ou 6, **caractérisé en ce que** ledit ensemble de suspension de roulettes (4) est constitué de deux ensembles de cadres allongés (41, 42) en prise avec des roulettes (51, 52) et positionnés au niveau du bord inférieur desdites poutres longitudinales (2) de ladite construction de cadre (1), chaque ensemble de cadres allongés comprenant un cadre (41) d'une roue avant (51) et un cadre (42) d'une roue arrière (52), s'étendant angulairement et dans des directions mutuellement opposées.

8. Chariot selon la revendication 7, **caractérisé en ce que** ledit cadre (42) de ladite roue arrière (52) et ledit cadre (41) de ladite roue avant (51) sont fixés en un point, où ledit cadre (41) de ladite roue avant (51) est fixé sur le côté intérieur, et ledit cadre (42) de ladite roue arrière (52) est fixé sur le côté extérieur, de ladite poutre longitudinale (2) de ladite construction de cadre (1).

9. Chariot selon la revendication 1, **caractérisé en ce que** ledit dispositif de commande électronique (6) est pourvu d'un ordinateur, d'un affichage utilisateur (61), de haut-parleurs (64), d'un lecteur de code-barres (62) et d'un module de communication sans fil (63).

10. Chariot selon l'une quelconque des revendications précédentes, **caractérisé en ce qu'**il comporte des modules de charge électrique.

11. Chariot selon la revendication 10, **caractérisé en ce que** lesdits modules de charge électrique sont des modules de charge par induction (11).

12. Chariot selon l'une quelconque des revendications précédentes, **caractérisé en ce qu'**i**l** est muni de moyens d'éclairage à LED (10) positionnés le long des bords desdites poutres longitudinales de ladite construction de cadre.
